Europäisches Patentamt

European Patent Office

Office européen des brevets

(11) Publication number: **0 296 715**
**A1**

## (12) EUROPEAN PATENT APPLICATION

(21) Application number: **88304664.1**

(22) Date of filing: **23.05.88**

(51) Int. Cl.⁴: **H02K 5/04**

(30) Priority: **23.06.87 GB 8714682**

(43) Date of publication of application:
**28.12.88 Bulletin 88/52**

(84) Designated Contracting States:
**DE FR GB IT**

(71) Applicant: **Johnson Electric Industrial Manufactory Limited**
**Johnson Building 14-16 Lee Chung Street Chaiwan(HK)**

(72) Inventor: **Wang, Patrick Shui-Chung**
**22 Belleview Drive, 10/F**
**Repulse Bay Garden Repulse Bay(HK)**

(74) Representative: **Higgins, Michael Roger et al**
**MARKS & CLERK 57/60 Lincoln's Inn Fields**
**London WC2A 3LS(GB)**

(54) A housing for an electric motor and a method of making same.

(57) The housing (5) is drawn from metal and is of can-like form having a peripheral wall, an end plate (6) at one end, and an outwardly extending bearing seat (8) integral with the end plate. An inwardly extending annular lip (24) is provided between the end plate and the bearing seat to soften the radii of the end plate/bearing seat step. Parts of the lip (24) may be radially inwardly deformed to secure a bearing (7) in the bearing seat (8) thus allowing a smaller interference between the bearing and the seat.

FIG. 3

FIG. 4

EP 0 296 715 A1

## A housing for an electric motor and a method of making same

This invention relates to a housing for an electric motor, particularly but not exclusively a fractional horsepower permanent magnet direct current electric motor, and to a method of making same.

It is known to provide fractional horsepower motors with a drawn can-like motor housing, the closed end of which supports a motor bearing. It is common practice, when drawing such a housing, to simultaneously draw an extended seat as a means of locating a sleeve bearing or other type of bearing.

A problem arises in small motors particularly when there is a limitation on the diameter and length of the bearing seat's excursion beyond the closed end of the housing. The radius within which the housing/bearing seat step is made must be small to allow a reasonably straight length on the bearing seat for mounting purposes. Such sharp radii create weak sections in the metal due to over stressing of the drawing material and it has been known for motors to fail when subjected to vibration forces as might be met in automobile applications.

The present invention seeks to overcome this drawback of the prior art.

According to the present invention, there is provided a drawn metal housing for an electric motor, the housing being of can-like form having a peripheral wall, an end plate at one end, and an outwardly extending bearing seat integral with the end plate, wherein an inwardly extending annular lip is provided between the end plate and the bearing seat.

The provision of the lip allows for a softening of the radii of the turns between the end plate and the bearing seat, whilst maintaining the external reference dimensions of the bearing seat. This thus eliminates the weak sections.

Preferably, the lip has been formed by reverse drawing a portion of the end plate inside the housing.

Advantageously, at least one or more parts of the lip are radially inwardly deformed after insertion of a bearing, e.g. a sleeve bearing, into the bearing seat to secure the bearing in the bearing seat. Thus a smaller interference between the bearing and the bearing seat can be used thereby causing less distortion of the bearing bore during the insertion process.

The invention in further aspects resides in an electric motor as claimed in claim 5 or claim 6, and in a method as claimed in claim 7 or claim 8.

The invention will now be more particularly described, by way of example, with reference to the accompanying drawings, in which:-

Figure 1 is a sectional view through a known permanent magnet direct current motor;

Figure 2 is an enlarged view of half of the closed end of the can-like metal housing of the known motor of Figure 1;

Figure 3 is a view similar to Figure 2 but showing a housing embodying the present invention, and

Figure 4 is a view taken in the direction of arrow A in Figure 3, showing a bearing in the bearing seat.

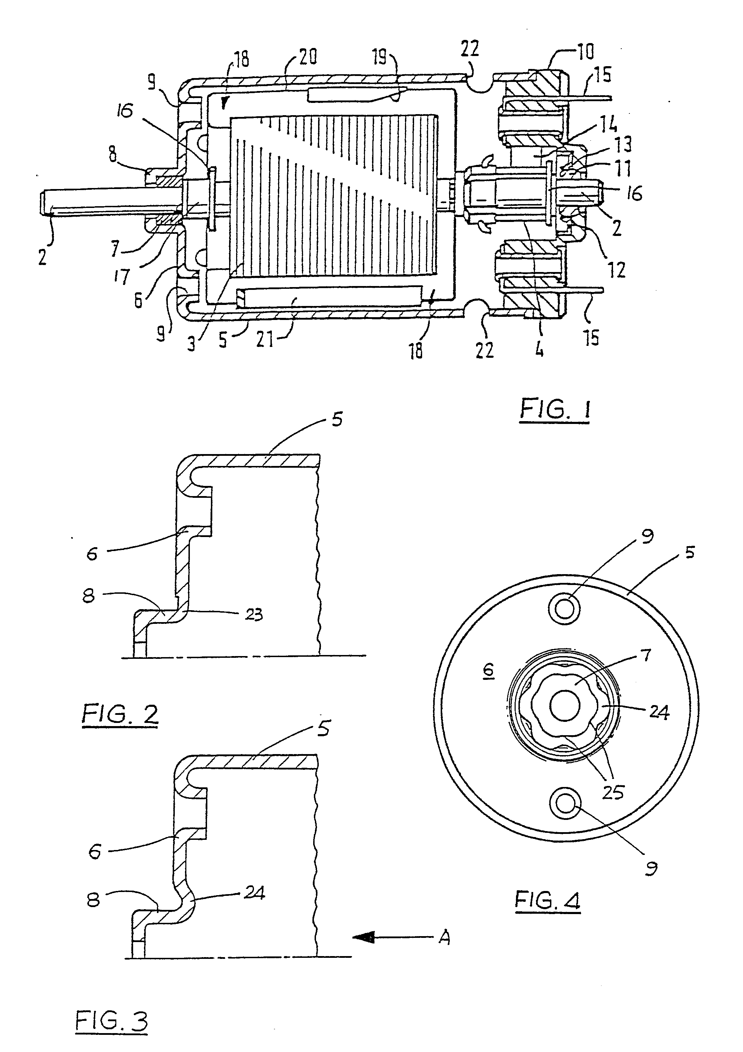

Referring to Figure 1, a known small, fractional horsepower permanent magnet direct current motor 1 is illustrated. The motor comprises a motor shaft 2 which carries a wound armature 3 and a commutator 4. The commutator 4 and armature 3 are mounted fast on the shaft 2 and the armature is wound and connected to the commutator in a manner generally known in the art.

The shaft 2 is mounted in a cylindrical can-like metal housing 5. Housing 5 is closed at one end by an integrally formed end plate 6. End plate 6 carries a bearing 7 in bearing seat 8, the shaft 2 being journalled in the bearing 7. A brass collar 17 is a force fit on the shaft 2 to limit the axial movement of the shaft through the bearing 7.

End plate 6 has a plurality, typically four, of circumferentially extending slots 9 for ventilation of the inside of the motor.

A plastics end cap 10, typically of nylon, houses a self aligning sintered bearing 11 which is held in place by axially extending tabs 12 of a washer 13 which is pressed into the end cap 10. The end cap 10 supports brush gear comprising a pair of carbon brushes 14 (one is seen in Figure 1) which are urged against the commutator 4 by brush leaves (not shown) connected to power supply terminals 15.

Washers 16 may be provided to adjust the axial position of the armature relative to the permanent magnets and provide bearing surfaces in the axial direction.

Apertures (not shown) are formed in the end cap 10 allowing further ventilation of the inside of the motor.

The housing 5 carries two permanent magnets 18, which each bear at one axial edge 20 against a respective tang 19 and are urged apart at their other axial edges by a 'u' shape spring 21.

Windows in the form of circumferentially extending slots 22 are provided in the housing 5 in the region between the brushes 14 and the armature 3.

The housing 5 is deep drawn from metal plate and the bearing seat 8 is conventionally drawn simultaneously with the housing 5. As more clearly illustrated in Figure 2 the radius within which the housing/bearing seat step 23 is made is small and this creates problems as referred to previously.

The improvement provided by the present invention is the provision of an annular lip 24 as shown in Figures 3 and 4 between the end plate 6 and the bearing seat 8. The lip 24 is of rounded cross-section, and extends inwardly into the housing 5. The lip 24 is formed at the same time as the housing 5 and bearing seat 8 by reverse drawing a portion of the end plate 6 inside the housing 5. The provision of the lip 24 eliminates the sharp radius of the housing/bearing seat step 23 of the known motor, whilst leaving the outside reference dimensions of the bearing seat 8 unchanged.

As shown in Figure 4, parts 25 of the lip may be radially inwardly deformed to secure the bearing 7 in the bearing seat 8. As mentioned previously this allows the use of a smaller interference between the bearing 7 and the bearing seat 8 thereby causing less distortion of the bearing bore during insertion of the bearing in the bearing seat.

The above embodiment is given by way of example only and various modifcations may be apparent to persons skilled in the art without departing from the scope of the invention defined by the appended claims.

## Claims

1. A drawn metal housing for an electric motor, the housing (5) being of can-like form having a peripheral wall, an end plate (6) at one end, and an outwardly extending bearing seat (8) integral with the end plate, characterized in that an inwardly extending annular lip (24) is provided between the end plate (6) and the bearing seat (8).

2. A housing as claimed in claim 1, characterised in that the lip (24) is of rounded cross-section.

3. A housing as claimed in claim 1 or claim 2, characterized in that the lip (24) has been formed by reverse drawing a portion of the end plate (6) inside the housing (5).

4. A housing as claimed in any one of claims 1 to 3 in combination with a bearing (7) mounted in the bearing seat (8), characterized in that at least one or more parts (25) of the annular lip have been radially inwardly deformed to secure the bearing in the bearing seat.

5. An electric motor comprising a housing as claimed in any one of the preceding claims.

6. An electric motor as claimed in claim 5 in the form of a fractional horsepower permanent magnet direct current electric motor.

7. A method of making a housing for an electric motor, comprising the steps of:

(a) drawing a can-like metal motor casing (5) having a peripheral wall, an end plate (6) at one end, and an outwardly extending bearing seat (8) in the end plate, and

(b) reverse drawing a portion of the end plate (6) inside the housing to form a rounded inwardly extending lip (24) between the end plate and the bearing seat.

8. A method as claimed in claim 7, comprising the additional steps of :

(c) mounting a bearing (7) in the bearing seat (8), and

(d) radially inwardly deforming at least one more parts (25) of the lip (24) to secure bearing in the bearing seat.

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| A | GB-A-1 339 371 (R. BOSCH GMBH)<br>* page 1, line 89 - page 2, line 82; figure 1 *<br>--- | 1,2,5,7,8 | H 02 K 5/04 |
| A | US-A-3 167 672 (M.D. TUPPER)<br>* column 2, lines 15-40; column 3, line 4 - column 4, line 28; figures 1,2 *<br>--- | 1,2,7 | |
| A | GB-A- 988 209 (R. BOSCH GMBH)<br>* page 1, lines 8-72; figures 1-3 *<br>----- | 1,6 | |

TECHNICAL FIELDS SEARCHED (Int. Cl.3)

H 02 K 5/00
H 02 K 15/00

The present search report has been drawn up for all claims

| Place of search | Date of completion of the search | Examiner |
|---|---|---|
| BERLIN | 02-09-1988 | WEIHS J.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)